Europäisches Patentamt

European Patent Office

Office européen des brevets

(19)

(11) Veröffentlichungsnummer: **0 040 756**
**B1**

(12) # EUROPÄISCHE PATENTSCHRIFT

(45) Veröffentlichungstag der Patentschrift:
27.07.83

(21) Anmeldenummer: 81103667.2

(22) Anmeldetag: 13.05.81

(51) Int. Cl.³: **C 03 B 9/44,** C 03 B 9/16,
C 03 B 9/193

(54) Vorrichtung zur Herstellung von Hohlglasartikeln.

(30) Priorität: 24.05.80 DE 3020042

(43) Veröffentlichungstag der Anmeldung:
02.12.81 Patentblatt 81/48

(45) Bekanntmachung des Hinweises auf die Patenterteilung:
27.07.83 Patentblatt 83/30

(84) Benannte Vertragsstaaten:
AT BE CH FR GB IT LI NL SE

(56) Entgegenhaltungen:
US-A-1 826 019
US-A-1 911 119

(73) Patentinhaber: VEBA-GLAS Aktiengesellschaft,
Ruhrglasstrasse 50, D-4300 Essen 12 (DE)

(72) Erfinder: Hüllen, Helmut, Dreilindenstrasse 93,
D-4300 Essen 1 (DE)
Erfinder: Knoth, Werner-Dieter, Byfangerstrasse 175,
D-4300 Essen 15 (DE)

(74) Vertreter: Spalthoff, Adolf, Dipl.-Ing.,
Pelmanstrasse 31 P.O. Box 34 02 20,
D-4300 Essen 1 (DE)

BUNDESDRUCKEREI BERLIN

## Vorrichtung zur Herstellung von Hohlglasartikeln

Die Erfindung betrifft eine Vorrichtung zur Herstellung von Hohlglasartikeln, bei welcher ein Glastropfen in eine Vorform gegeben wird, in welcher dieser zum Külbel vorgeblasen oder gepreßt wird und anschließend das Külbel mittels eines an einem schwenkbaren Arm angeordneten Mündungshalters in eine Fertigform übergeben, in dieser fertiggeblasen und danach aus dieser entfernt wird. Die Aufteilung des Herstellungsvorganges in zwei Formenbereiche bei derartigen als IS-Maschinen bezeichneten Herstellungsmaschinen ist deshalb erforderlich, weil das Endprodukt nicht in einer Fertigungsstufe aus dem Glastropfen als Ausgangsprodukt hergestellt werden kann.

Dieser Unterteilung der Arbeitsweise der bekannten Herstellungsmaschinen haftet ein schwerwiegender Nachteil an. Tritt nämlich an einer Fertigform eine Störung des Herstellungsprozesses auf, so produziert die zugehörige Vorform laufend weiter, da sie von der Störung an der Fertigform unbeeinflußt bleibt. Dies führt aber dazu, daß die Störung auf der Fertigformseite noch weiter vergrößert wird. Diese Vervielfachung der Störung kann so weit gehen, daß eine Zerstörung der Form und des Antriebsmechanismus eintreten kann.

Um diesen Nachteil zu beseitigen ist es bekannt, durch eine Störungserkennung und Rückmeldung dieser an die Vorform die weiter erfolgende Übergabe von Külbeln von der Vorform an die Fertigform zu unterbrechen. Dieser Vorschlag bringt aber den Nachteil mit sich, daß die Vorform sehr schnell abkühlt, weil sie keine Glastropfen mehr erhält. Nach jeder Störungsbeseitigung ist es daher zur Wiederaufnahme der Herstellung von Glasartikeln erforderlich, daß zunächst einmal ein bestimmtes Anlaufproduktionsvolumen erzeugt werden muß, was aber gleichzeitig als unbrauchbar zu verwerfen ist, da die Temperatur der Vorform für eine ordnungsgemäße Fertigung noch nicht ausreicht, welche aber einen erheblichen Einfluß auf die Qualität der gefertigten Glasartikel ausübt.

Von diesem Stand der Technik ausgehend liegt der Erfindung die Aufgabe zugrunde, eine Vorrichtung der eingangs genannten Art zu schaffen, welche unter Vermeidung vorerwähnter Nachteile in einfacher und schneller Weise bei Auftreten einer Störung auf der Fertigformseite eine voneinander unabhängige Arbeitsweise der Vorform und zugehörigen Fertigform ermöglicht.

Gemäß der Erfindung wird dies dadurch erreicht, daß die Vorrichtung mit einer Auffangeinrichtung für das Külbel ausgerüstet ist, welche zwischen die Vor- und eine dieser zugeordnete Fertigform einbringbar ist. Bei Auftreten einer Störung an der Fertigformseite wird die Auffangeinrichtung zwischen Vor- und Fertigform eingebracht, so daß die Vorform nunmehr unbeschränkt weiterarbeiten kann und auf ihrer für die Fertigung optimalen Temperatur gehalten werden kann. Die von der Vorform weiter produzierten Külbel werden durch die Auffangvorrichtung abgeleitet, so daß die Störung an der zugehörigen Fertigform ohne jegliche Behinderung beseitigt werden kann. Nach Beendigung der Störung wird die Auffangvorrichtung entfernt, so daß die Vorform ohne Zeit- und Stückzahlverlust die Külbel sofort wieder an die Fertigformseite weitergibt. Ein weiterer Vorteil besteht in der Möglichkeit, durch Einbringen der Auffangeinrichtung die Anlaufproduktion generell ohne Beaufschlagung der Fertigformen vorformseitig komplett durchführen zu können. Erst nach Vorliegen einwandfreier Qualitäten auf der Vorformseite, z. B. im richtigen Einstellungsgleichgewicht zwischen Luftkühlung der Vorform und der Erwärmung durch das Glastropfen, wird durch Entfernen der Auffangeinrichtung der Weg zur weiteren Verarbeitung für das Külbel in der Fertigform freigegeben.

Vorteilhaft erfolgt die Steuerung des Armes des Mündungshalters und der Öffnung des Mündungshalters bei zwischen Vor- und Fertigform eingebrachter Auffangeinrichtung derart, daß die Schwenkbewegung des Armes des Mündungshalters im Bereich vor der Auffangeinrichtung gestoppt und der Mündungshalter geöffnet wird, so daß das Külbel in die Auffangeinrichtung geschleudert wird und aus dieser nach unten in eine Scherbenanlage zur Wiederverwendung fällt.

Das Einbringen der Auffangeinrichtung zwischen Vor- und Fertigform kann selbsttätig in Abhängigkeit von vorgegebenen Parametern erfolgen, wie z. B. vom Arbeitsgang der Maschine, deren Steuerorganen, dem Külbel, dem Fertigartikel, sich der Maschine annähernden Fremdkörpern oder sonstigen für den Stop des Produktionsprozesses notwendigen Werten. Auf diese Weise erhöht sich z. B. die Arbeitssicherheit für das Bedienungspersonal erheblich, da bei Annäherung von Körperteilen des Bedienungspersonals eine Sperre der Külbelzuführung zur Fertigform automatisch ausgelöst werden kann. Sobald sich die Bedienungsperson aus dem gefährdeten Bereich entfernt hat, wird die Übergabeunterbrechung ebenso selbsttätig wieder aufgehoben, d. h. die Auffangvorrichtung aus dem Bereich zwischen Vor- und Fertigform entfernt.

Gemäß einem weiteren Vorschlag der Erfindung erfolgt das Einbringen der Auffangeinrichtung zwischen Vor- und Fertigform bzw. deren Entfernen durch eine mechanische und/oder elektrische und/oder elektronische und/oder pneumatische und/oder hydraulische Antriebseinrichtung. Das Einbringen kann durch Verschieben, Verschwenken od. dgl. durchgeführt werden.

Die erfindungsgemäße Ausgestaltung eignet sich besonders für eine Produktionsmaschine, bei welcher einer Vorform mindestens zwei Fertigformen auf einem Drehteller od. dgl. zugeordnet sind, da auf diese Weise die durch diese Bauart bedingte Leistungssteigerung in vollem Umfange ausgenutzt werden kann.

Ein Ausführungsbeispiel der Erfindung ist an Hand der Zeichnung näher erläutert, und zwar zeigt

Fig. 1 in prinzipieller Darstellung eine teilweise geschnittene Ansicht einer Glasherstellungsmaschine mit der erfindungsgemäßen Vorrichtung und

Fig. 2 eine Draufsicht der Fig. 1.

Mit 1 ist das Bett der IS-Maschine bezeichnet, auf welchem die Vorform 2 sowie die Fertigform 3 mit Abstand zueinander angeordnet sind. Die Übergabe des in der Vorform 2 ausgeformten Külbels 5 in die Fertigform 3 geschieht mittels eines schwenkbar gelagerten Armes, an dessen freiem Ende sich der Mündungshalter 4 befindet.

Bei Auftreten einer Störung auf der Fertigformseite wird die Auffangeinrichtung 6 zwischen die Vorform 2 und die Fertigform 3 eingebracht. Nunmehr gelangen die vom Arm des Mündungshalters 4 weiter zugeführten Külbel 5 nicht mehr in die Fertigform, sondern vielmehr in den Einlauftrichter der Auffangeinrichtung 6, und zwar durch die Energie der Schwenkbewegung des Armes 4. In der Auffangeinrichtung 6 werden die Külbel 5 nach unten hin abgeleitet, so daß diese in eine darunter befindliche, nicht weiter dargestellte Scherbenanlage fallen, was durch den Pfeil 7 gekennzeichnet ist.

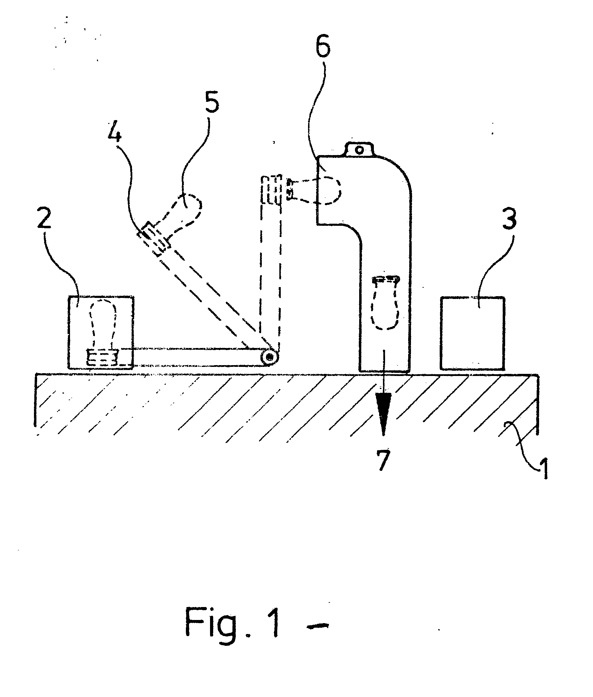

Bei eingebrachter Auffangeinrichtung 6 wird der Schwenkbereich des Armes verkürzt in die aus Fig. 1 gestrichelt eingezeichnete Stellung, nämlich etwa senkrecht vor der Auffangeinrichtung 6. Kurz vor Erreichen der Endstellung wird der Mündungshalter 4 geöffnet, so daß das darin befindliche Külbel 5 unter der Einwirkung der Fliehkraft in die trichterförmige Öffnung der Auffangeinrichtung 6 geschleudert wird.

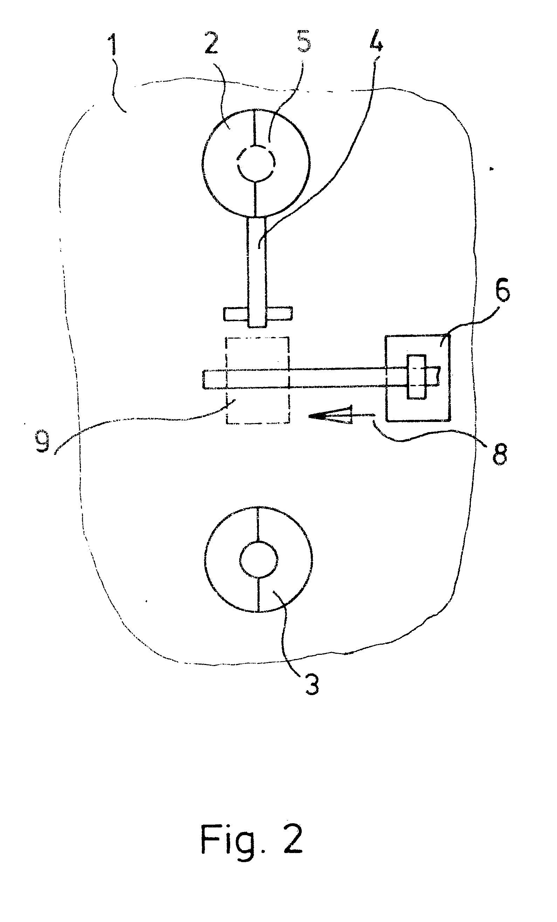

In Fig. 2 ist die Auffangeinrichtung 6 mit ausgezogenen Strichen in ihrer Ruhelage dargestellt, während in gestrichelter Ausführung die Position 9 in der Arbeitslage zwischen Vorform 2 und Fertigform 3 gezeigt ist.

**Patentansprüche**

1. Vorrichtung zur Herstellung von Hohlglasartikeln, bei welcher ein Glastropfen in eine Vorform (2) gegeben wird, in welcher dieser zum Külbel (5) vorgeblasen und/oder gepreßt wird und anschließend das Külbel (5) mittels eines an einem schwenkbaren Arm angeordneten Mündungshalters (4) in eine Fertigform (3) übergeben, in dieser fertiggeblasen und danach aus dieser entfernt wird, dadurch gekennzeichnet, daß diese mit einer Auffangeinrichtung (6) für das Külbel (5) ausgerüstet ist, welche zwischen die Vorform (2) und eine dieser zugeordnete Fertigform (3) einbringbar ist.

2. Vorrichtung nach Anspruch 1, dadurch gekennzeichnet, daß die Steuerung des Armes des Mündungshalters (4) und der Öffnungsbewegung des Mündungshalters (4) bei zwischen Vor- (2) und Fertigform (3) eingebrachter Auffangeinrichtung (6) derart erfolgt, daß die Schwenkbewegung des Armes des Mündungshalters (4) im Bereich vor der Auffangeinrichtung (6) gestoppt und der Mündungshalter (4) geöffnet wird.

3. Vorrichtung nach Anspruch 1 und/oder 2. dadurch gekennzeichnet, daß das Einbringen der Auffangeinrichtung (6) zwischen Vor- und Fertigform (3) selbsttätig in Abhängigkeit von vorgegebenen Parametern erfolgt.

4. Vorrichtung nach Anspruch 1 und/oder einem oder mehreren der folgenden, dadurch gekennzeichnet, daß das Einbringen der Auffangeinrichtung (6) zwischen Vor- (2) und Fertigform (3) bzw. deren Rückbewegung durch eine mechanische und/oder elektrische und/oder elektronische und/oder pneumatische und/oder hydraulische Antriebseinrichtung erfolgt.

5. Vorrichtung nach Anspruch 1 und/oder einem oder mehreren der folgenden, dadurch gekennzeichnet, daß einer Vorform (2) mindestens zwei Fertigformen (3) auf einem Drehteller od dgl. zugeordnet sind.

**Claims**

1. Apparatus for the manufacture of hollowglas articles, in which a glas drop is given into a gathering mold (2) in which it is blown or pressed to form a parison (5) and subsequently the parison (5) is handed over by means of a muzzle holder (4) arranged at a swiveling arm to a finishing mold (3) in which it is finish blown and from which it is removed subsequently characterized thereby that it is provided with a catching device (6) for the parison (5), which is arranged to be placed between the gathering mold (2) and a finishing mold (3) assigned to it.

2. Apparatus according to claim 1 characterized thereby that the control of the arm of the muzzle holder (4) and the opening movement of the muzzle holder (4) is performed in such a manner that when the catching device (6) is placed between the gathering mold (2) and the finishing mold (3) swivel movement of the arm of the muzzle holder (4) is stopped in the region of the catching device (6) and the muzzle holder (4) is opened.

3. Apparatus according to claim 1 and/or 2 characterized thereby that the placing of the catching device (6) between the gathering mold and the finishing mold (3) takes place automatically in dependence upon predetermined parameters.

4. Apparatus according to claim 1 and/or one or more of the following characterized thereby that the placing of the catching device (6) between the gathering mold (2) and the finishing mold (3) or its return movement is effected by a mechanical and/or electric and/or electronic and/or pneumatic and/or hydraulic drive mechanism.

5. Apparatus according to claim 1 and/or one or more of the following characterized thereby that at least two finishing molds (3) on a revolving plate or the like are assigned to one gathering mold (2).

**Revendications**

1. Dispositif pour la fabrication d'articles en verre creux, dans lequel une goutte de verre est introduite dans un moule ébaucheur (2) dans lequel cette goutte est soufflée ou pressée sous la forme d'une paraison (5) et la paraison (5) est ensuite transférée au moyen d'un moule de bague (4) monté sur un bras pivotant dans un moule finisseur (3), soufflée dans ce moule finisseur et ensuite retirée de ce dernier, caractérisé par le fait qu'il est équipé d'un dispositif de réception (6) pour la paraison (5), lequel peut être introduit entre le moule ébaucheur (2) et un moule finisseur (3) associé à ce dernier.

2. Dispositif suivant la revendication 1, caractérisé par le fait que la commande du bras du moule de bague (4) et du mouvement d'ouverture du moule de bague (4), lorsque le dispositif de réception (6) à été introduit entre le moule ébaucheur (2) et le moule finisseur (3), a lieu de telle manière que le mouvement de pivotement du bras du moule de bague (4) soit arrêté dans la zone située devant le dispositif de réception (6) et que le moule de bague (4) soit ouvert.

3. Dispositif suivant la revendication 1 et/ou 2, caractérisé par le fait que l'introduction du dispositif de réception (6) entre le moule ébaucheur (2) et le moule finisseur (3) à lieu automatiquement en fonction de paramètres prédéterminés.

4. Dispositif suivant la revendication 1 et/ou une ou plusieurs des revendications suivantes, caractérisé par le fait que l'introduction du dispositif de réception (6) entre le moule ébaucheur (2) et le moule finisseur (3) et son retrait ont lieu sous l'action d'un dispositif de commande mécanique et/ou électrique et/ou électronique et/ou pneumatique et/ou hydraulique.

5. Dispositif suivant la revendication 1 et/ou une ou plusieurs des revendications suivantes, caractérisé par le fait qu'au moins deux moules finisseurs (3) sont associés, sur un plateau rotatif ou analogue, à un moule ébaucheur (2).

Fig. 1 —

Fig. 2